# EUROPEAN PATENT SPECIFICATION

(11) **EP 2 139 237 B1**
(45) Date of publication and mention of the grant of the patent: **16.02.2011**
(21) Application number: 09171500.3
(22) Date of filing: 07.01.2008
(51) Int. Cl.: H04N 7/173, H04N 7/24, H04N 5/00

(54) **An IPTV receiver and method for controlling contents viewing in the IPTV receiver**
IPTV-Empfänger und Verfahren zum Steuern der Inhalte des IPTV-Empfängers
Récepteur IPTV et procédé de contrôle de contenus affichés dans le récepteur IPTV

(30) Priority: 05.01.2007 KR 20070001541
(43) Date of publication of application: 30.12.2009
(62) Divisional of application: 08100150.5
(73) Proprietor: LG Electronics Inc., Seoul 150-721 (KR)
(72) Inventor: Song, Jae Hyung, Seoul 137-724 (KR); Suh, Jong Yeul, Seoul 137-724 (KR); Kim, Jin Pil, Seoul 137-724 (KR)
(74) Representative: Cabinet Plasseraud

(56) References cited:
- WO-A1-01/49030
- WO-A1-2005/015914
- US-A1- 2006 242 674
- US-A1- 2007 056 014
- "Digital Video Broadcasting (DVB); Transport of MPEG-2 Based DVB Services over IP Based Networks European Broadcasting Union Union Européenne de Radio-Télévision EBUÜER; ETSI TS 102 034" ETSI STANDARDS, LIS, SOPHIA ANTIPOLIS CEDEX, FRANCE, vol. BC, no. V1.2.1, 1 September 2006 (2006-09-01), XP014039759 ISSN: 0000-0001
- "Digital Video Broadcasting (DVB); Specification for Service Information (SI) in DVB systems European Broadcasting Union Union Européenne de Radio-Télévision EBUÜER; ETSI EN 300 468" ETSI STANDARDS, LIS, SOPHIA ANTIPOLIS CEDEX, FRANCE, vol. BC, no. V1.7.1, 1 May 2006 (2006-05-01), XP014034039 ISSN: 0000-0001
- ANONYMOUS: "U.S. and Canadian Region Rating Tables (RRT) and Content Advisory Descriptors for Transport of Content Advisory information using ATSC A/65-A Program and System Information Protocol (PSIP);CEA-766-A" April 2001 (2001-04), , XP017003842 * the whole document *

## Description

### BACKGROUND

### Field of the Disclosure

The present disclosure relates to a rating system, and more particularly, to a rating system in internet protocol television (IPTV) environment and method of transmitting/receiving the same.

### Discussion of the Related Art

Generally, contents are provided to a user by terrestrial, cable or satellite broadcasting in a broadcasting environment according to a related art.

The broadcasting environment is ongoing to develop into digital broadcasting from analog broadcasting and to get commercialized. So, the broadcasting environment demands services more diverse and massive than the conventional broadcasting environment for real-time broadcast, Contents on Demand (CoD), game, news, etc.

An internet protocol television (IPTV) broadcasting via internet network tends to emerge in accordance with the variation of the broadcasting environment. The IPTV broadcasting mainly provides real-time service environment or interactive service environment. For the IPTV broadcasting, an IPTV receiver is a common name of a receiving device capable of providing a user with more diverse services including multimedia data using high-speed internet on a pre-established infrastructure or network or transmitting user's requests or demands to a transmitting side.

To control contents viewing in the conventional broadcasting environment, a receiver undergoes less confusion due to rating system structure.

On the other hand, in the IPTV environment, an IPTV receiver is able to contents and rating system structure if connected via IP network regardless of general geographical concept. In this case, the IPTV receiver can receive a rating system structure totally different from a previously provided rating system structure.

A problem of the rating system structure in the IPTV environment may confuse controlling contents viewing in user's aspect. This is very important. So, the rating system structure problem in the IPTV environment should be solved. If this problem is not solved, a result may be caused to raise new problems regardless of user's intentions.

### SUMMARY

Accordingly, the present disclosure is directed to an IPTV receiver, and methods for controlling contents viewing in the IPTV environment that substantially obviate one or more problems due to limitations and disadvantages of the related art.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is proposed a method for controlling a content viewing in an internet protocol television (IPTV) receiver according to claim 1.

In another aspect of the present invention, there is proposed a method for controlling a content viewing in an internet protocol television (IPTV) receiver according to claim 5.

In another aspect of the present invention,, there is proposed an internet protocol television (IPTV) receiver according to claim 9.

In still another aspect of the present invention, there is proposed an internet protocol television (IPTV) receiver according to claim 12.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a conceptional block diagram of an example for IPTV environment;

FIG. 2 is an exemplary diagram of a rating system of contents in each region;

FIG. 3 is an exemplary diagram of the universal rating system information;

FIG. 4A and FIG. 4B are exemplary diagrams to explain a service discovery information transmitting system;

FIG. 5 is an exemplary diagram to explain a method of downloading a rating system structure in an IPTV broadcast receiver;

FIG. 6 is an exemplary flowchart for the method shown in FIG. 5;

FIG. 7 is an exemplary diagram of a service provider discovery record;

FIG. 8 is an exemplary diagram of a rating conversion table;

FIG. 9 is an exemplary block diagram to explain a case of receiving a rating system structure in an IPTV receiver;

FIG. 10 is an exemplary flowchart for the method shown in FIG. 9;

FIG. 11 is an exemplary diagram of a service discovery record;

FIGs. 12 to 15 are exemplary diagrams of service discovery (SD) information including rating relevant information;

FIG. 16 is an exemplary block diagram to explain a method controlling contents viewing in an IPTV receiver;

FIG. 17 is an exemplary flowchart to explain FIG. 16;

FIG. 18 is another exemplary block diagram to explain a method controlling contents viewing in an IPTV receiver;

FIG. 19 is another exemplary flowchart to explain FIG. 18; and

FIG. 20 is an exemplary block diagram of an IPTV receiver.

### DETAILED DESCRIPTION

Reference will now be made in detail to the preferred embodiments of the present invention, examples of which are illustrated in the accompanying drawings. Wherever possible, the same reference numbers will be used throughout the drawings to refer to the same or like parts.

A universal rating system structure for contents in internet protocol television (IPTV) environment according to the present disclosure is defined in the following description. And, how to process the defined rating system structure is also explained in detail with reference to the accompanying drawings as well.

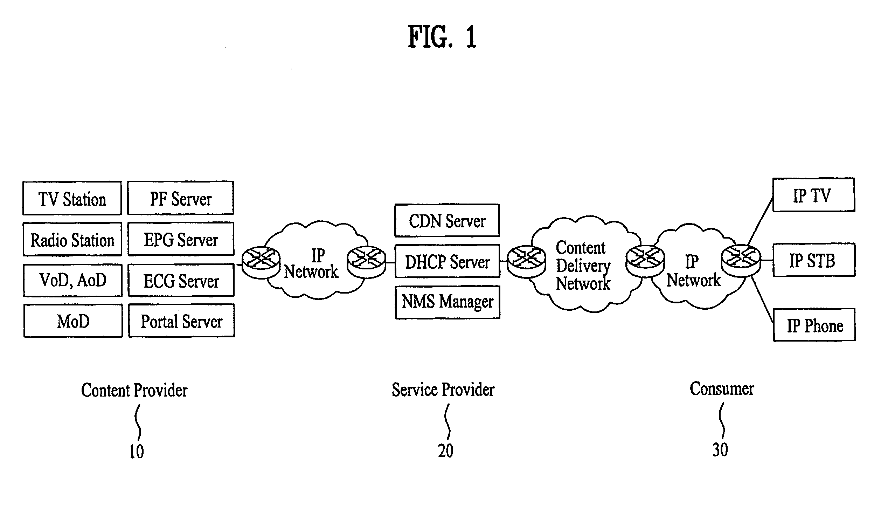

First, the IPTV environment will be described. FIG. 1 is an exemplary diagram of the IPTV environment.

The IPTV environment or whole system largely includes a program provider (PP) 10, a service provider (SP) 20, and a customer 30. At this time, the program provider (PP) 10 is also called a platform provider and the customer 30 is also called a consumer.

The program provider (PP) 10 is a large group for providing all services and data for a broadcasting program.

The service provider (SP) 20 transmits multimedia data to the customer 30, maintains, repairs and manages a delivery network in order to provide a stable reception environment of the customer 30. And, the service provider (SP) 20 provides foundation equipments and functions for network transmission to the program provider (PP) 10.

The customer 30 reproduces the received data using the foundation equipments such as a cable or an x digital subscriber line (xDSL) and immediately responds to the request of a user. The customer 30 includes as an IPTV, an IP set-top box (IP STB), and an IP phone, all of which are manufactured by manufacturers for manufacturing an IPTV. The IP phone may provide a phone service if the IP phone includes an IPTV receiver function. Hereinafter, each of the groups having different functions will be described in detail.

First, the Program Provider (PP) 10 includes, for example, a TV station, a radio station, a video-on-demand (VoD)/audio-on-demand (AoD) service, a music-on-demand (MoD) service, a Packet Filter (PF) server, an electronic program guide (EPG) server, an electronic content guide (ECG) server, and a portal server, each of which will now be described.

The TV station includes a terrestrial broadcasting station or a cable broadcasting station. The TV station creates and stores a broadcasting program which can be viewed by users, converts the broadcasting program into a digital signal, and transmits the digital signal in a variety of broadcasting formats.

The radio station generally operates without a video channel. Alternatively, the radio station may include a video channel.

The VoD/AoD service has characteristics different from those of the TV station and the radio station. The Program Provider (PP) 10 generally stores a program to be broadcasted, but cannot rewind or stop a successive live broadcasting program without recording the program.

In contrast, the VoD/AoD service may store, reproduce and provide a broadcasting program, movie, or music desired by a user. For example, when a user cannot view a broadcasting program in real time, the user may access a site for providing the broadcasting service, download a file, and immediately reproduce the file. The AoD service also provides a function for allowing a user to listening to an audio program in real time when the audio program is unlikely to be recorded.

The MoD service may provide a function for allowing a user to download and listen to favorite music. The MoD service is similar to the AoD service, except that the service target thereof expands by allowing a record company or a record distributor to expand the existing web service.

The PF server may be provided by an enterprise for managing all broadcasting information and location information provided by the Program Provider (PP) 10. The PF server provides the broadcasting schedule of the TV station and/or Audio station (hereinafter, referred to as a broadcasting station), location information necessary for broadcasting, and information related to the access of a user.

Accordingly, the PF server should necessarily provide a corresponding service in the IPTV environment and, in this time, the broadcasting station should include the PF server. If the broadcasting station does not include the PF server in the IPTV environment, a user may not access the broadcasting station. The customer 30 should process information received via the service provided by the PF server and display the information on a screen.

The EPG server provides a service for allowing a user to access about broadcasting programs according to time zones or channels, which is a representative service provided by a TV guide company. The EPG server allows a program to be automatically installed and executed in the customer 30.

The customer 30 may receive the service provided by the PF server to obtain only information about a corresponding broadcasting station or receive the service provided by the EPG server to simultaneously obtain information about the real-time broadcasting channels of all broadcasting stations. For example, the customer 30 may receive the EPG service provided by the EPG server to reserved-record CNN news or reserved-view Disney broadcasting. Accordingly, the EPG server should provide information about broadcasting programs of a specific area according to time zones.

In particular, the EPG service may search the contents of a drama, confirm the category of the drama, such as a science fiction (SF), a drama, or an animation, and provide detailed information about the plot or the characters of a broadcasting program, for example, a drama or movie. The customer 30 may access the EPG service using an EPG key included in a remote controller.

The ECG service provided by the ECG server allows a user to conveniently use information about the contents which the Program Provider 10 is having, the location of an accessed server, and access rights. At this time, the ECG service may provide a function, which allows the user to easily access a server for having contents, and detailed information about the contents. That is, the ECG service is not a real-time service and provides a combination of the VoD/AoD service and the MoD service similar to the EPG service, thereby reducing the burden that the user individually accesses the server in order to view or download contents via any content service.

The ECG service does not provide the user with real-time broadcasting channel information, unlike the EPG service. That is, the ECG service provides information about broadcasting channel, which is previously stored in the server, such that the user can conveniently view, download, and store the contents any time.

For example, the user should access a PF server having a difficult address to obtain information about the server for providing contents, which is an effort- and time consuming process. However, when the user applies for the ECG service using an ECG button included in the remote controller, the user can collect all contents via an ECG program which is automatically installed, check information about the contents, access only a desired server, and obtain desired data, thereby consulting user's own convenience.

The service provided by the portal server is a web service provided by each broadcasting station and may provide information necessary for the connection to the web server of each broadcasting station or enterprise for providing contents. The portal server may search a list of programs provided by each broadcasting station or Program Provider (PP) 10 for providing a content service and may provide an EPG function or an ECG function.

Since the portal service has a function such as a user authentication or a license contract, the user needs to access the portal service in order to view a desired program. In addition, the ECG or EPG service provides a list of unified broadcasting programs or contents, but the portal service provides information about the list of broadcasting programs or contents of the Program Provider such that detailed searching is possible. The user may easily access the portal service using a remote controller.

Up to now, the services provided by the Program Provider (PP) 10 were described. The broadcasting stations or the servers should access the Internet so as to transmit programs in real time or transmit broadcasting information.

The broadcasting stations or the servers should include a system which is connected to the network of the Service Provider (SP) 20 to transmit multimedia data without an error or delay, using an Internet (real-time) protocol, such as a real-time transport protocol (RTP), a real-time streaming protocol (RTSP), a resource reservation protocol (RSVP), or a multi-protocol label switching (MPLS).

For example, a specific server transcodes multimedia data in conformity with the IPTV environment, attaches the RTP/UDP (user datagram protocol) including time information to the multimedia data in conformity with caption or lip-sync, and sends the multimedia data to an IP network provided by the Service Provider (SP) 20, such that the Program Provider (PP) 10 transmits the multimedia data in real time according to the moving picture experts group-2 (MPEG-2) method and/or the audio coding-3 (AC-3) method in the IPTV environment.

The Service Provider (SP) 20 provides the bandwidth and the stability of the network such that multimedia data and/or broadcasting data received from the Program Provider (PP) 10 by the above-described process can be transmitted.

The Service Provider (SP) 20 may provide an IPTV service using the existing cable network. However, in this case, the Service Provider (SP) 20 should change the equipments of a delivery network. That is, the Service Provider (SP) 20 includes network equipments for transmitting data in real time and considers the bandwidth of the customer 30.

The Service Provider (SP) 20 should process a large amount of multimedia data to reduce the bandwidth using the equipments and a multicast service which is a basic network service of the IPTV receiver. However, when the Service Provider (SP) 20 cannot sufficiently ensure the bandwidth, the Service Provider (SP) 20 may transcode the multimedia data and/or the broadcasting data received from the Program Provider (PP) 10 or the optical cable network again and convert the multimedia data and/or the broadcasting data into the format such as MPEG-4 or MPEG-7.

In this case, the Service Provider (SP) 20 may include a network management system (NMS) manager, a dynamic host control protocol (DHCP) server, and a content delivery network (CDN) server.

The NMS manager manages the delivery network between the Service Provider (SP) 20 and the customer 30 and an IPTV receiver of the customer 30. For example, the Service Provider (SP) 20 can confirm that the customer 30 cannot normally receive a broadcasting program due to any problem in the delivery network from the NMS manager and must include an emergency means for solving the problem.

The NMS manager is widely used as the standardized means for controlling and managing remote machines of a transport layer. That is, the Service Provider (SP) 20 can check how much traffic occurs with respect to any broadcasting program and an area where the bandwidth is insufficient, from the NMS manager.

The Service Provider (SP) 20 should provide the Program Provider (PP) 10 with the service of the NMS manager such that a group can be created and managed at the time of providing the multicast service. This is because the Program Provider (PP) 10 may further create a multicast group in a special case. The DHCP server may automatically allocate an IP address to the IPTV receiver of the customer 30 and notify the address of the CDN server to the IPTV receiver. The DHCP server is used as means for allocating the IP address to a personal computer (PC) even in a general network.

That is, the Service Provider (SP) 20 transmits the accessible address to the IPTV receiver which can be used from the DHCP server such that a user performs a registration procedure upon initial access. The Service Provider (SP) 20 may provide the Internet protocol version 4 (IPv4) or the internet protocol version 6 (IPv6) to the IPTV receiver in the IPTV environment. That is, the IPTV receiver for providing the IPv4 may be used.

The CDN server provides CDN information and the IP address when the IPTV receiver is turned on and initially operated. The CDN information contains the registration or authentication of the user and the PF information. Accordingly, the IPTV receiver cannot receive the broadcasting program when the CDN information cannot be received from the Service Provider (SP) 20.

The customer 30 includes various forms of IPTV receivers. If the user has a general TV receiver, the user rents an IPTV STB to enjoy an IPTV broadcasting service with low cost. In addition, the user may apply for an IP phone to the Service Provider (SP) 20 with low additional service cost.

The IPTV receiver includes a network interface to access the network, receives a data packet using the IP, and reproduces multimedia data on a screen of the IPTV receiver. The IPTV receiver rapidly transmits the data packet over the network and receives information from the server, by manipulating the remote controller. That is, the IPTV receiver should bi-directionally transmit the request of the user while processing the multimedia data.

An external input device such as a remote controller should include a function button for an IPTV broadcasting service so as to provide a bi-directional service. Accordingly, the user can store and view a fantastic scene of a drama using the external input device and use an additional service such as location information or hotel reservation.

The NMS manager controls and manages the delivery network and the IPTV receiver. The range of the broadcasting service will be further expanded and the additional service will increase in the future in the IPTV environment. If the number of IPTV receivers will rapidly increase and the number of additional services will further increase, the role of the NMS manager will become important.

Accordingly, the Service Provider (SP) 20 and the IPTV receiver may use the SNMP due to the above-described environment. That is, the Service Provider (SP) 20 may check in detail statistical data of the protocol which is currently used by the IPTV receiver, information about the used processor, or a TV manufacturer name, using the SNMP protocol.

The SNMP is an application layer protocol for efficiently controlling and managing the equipments or the servers connected to network, which is currently upgraded from Version 1 to Version 3 and is continuously being upgraded for security.

Transmission and reception of rating system information in IPTV environment are explained as follows.

First of all, as mentioned in the foregoing description, rating system information has been provided by the related art terrestrial, cable or satellite broadcasting. For instance, rating region table (RRT) has been provided in North America or a parental rating descriptor has been provided in Europe. Yet, the corresponding information has been mostly limited.

According to the present disclosure, rating system information, which is defined by a method more diverse than that handled by a receiver in a related art broadcasting environment, can be received in IPTV environment. For instance, a receiver in North America receives RRT only. And, a receiver in Europe mostly receives a parental rating descriptor. Yet, in IPTV environment, a receiver in Asia is capable of receiving rating system information of the North American RRT and/or the European parental rating descriptor.

In this case, the receiver needs to handle the received rating system information to control contents viewing. For this, the present disclosure provides a method of using new rating system information or transforming the received rating system information to control contents viewing.

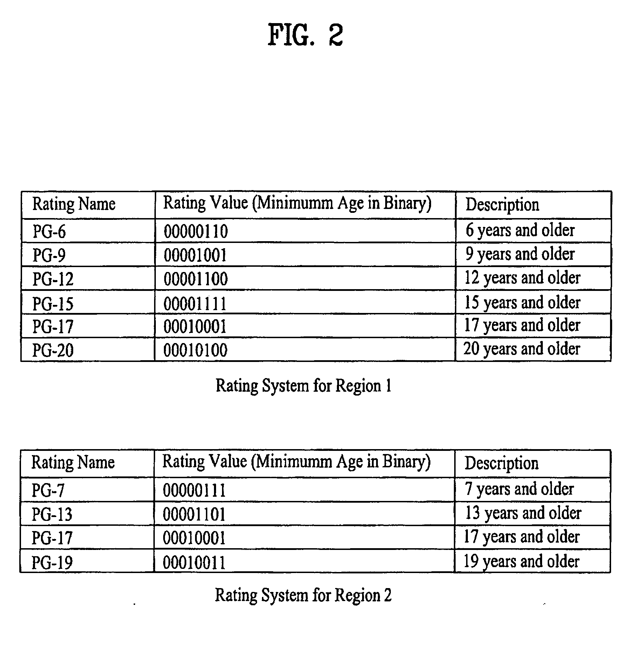

FIG. 2 is an exemplary diagram of a rating system in each region.

In particular, FIG. 2 shows rating system used in different regions, respectively. In this case, the rating system means at least one type within a rating system structure such as a dimension in North America region for example. The rating system is constructed with a rating name, a rating value, and a description. In this case, the rating system can be configured in accordance with a deliberation reference of education, culture or the like in the corresponding region.

So, same contents may have different rating names and different rating values, respectively. For instance, a region 1 in FIG. 2 has a rating system classified into 6 kinds of ratings including PG-6, PG-9, PG-12, PG-15, PG-17 and PG-20. And, a region 2 in FIG. 2 has a rating system classified into 4 kinds of ratings including PG-7, PG-13, PG-17 and PG-19. In this case, each of the ratings has a rating value corresponding to a reference set in the corresponding region. And, the rating value may mean a minimal viewing-allowed age for example.

Referring to FIG. 2, in case of the region 1, the rating value of PG-15 is set to '00001111' and means that viewers over age 15 at least are allowed to view the corresponding contents. Yet, the rating value of PG-15 of the region 1 is not included in the rating system of the region 2. In the region 2, there exists PG-13 or PG-17 similar to PG-15 only.

Let's assume that the rating system of the region 1 is provided to a receiver and that a parental control used to control contents viewing based on the rating system of the region 1 is set by a user with reference to the rating PG-15 of the region 1. And, the receiver receives contents from the region 2. The contents have a rating defined in region 2. But the receiver does not block corresponding contents received appropriately. Because the receiver does not have the rating system in region 2. Therefore, the receiver may work on the corresponding contents in a manner different from user's intention.

This happens because rating system information fails to be unified and differs in accordance with IPTV environment, e.g., region/country/area. So, as IPTV broadcasting services become more revitalized and generalized, the difference between the rating system information may raise serious problems.

To solve the above-mentioned problems, the present disclosure intends to propose a method of Parental Control function appropriate for received contents in IPTV broadcasting environment.

Rating system information and a method of Parental Control function using the universal rating system information according to the present disclosure are explained as follows.

The universal rating system information defined according to the present disclosure is explained as follows.

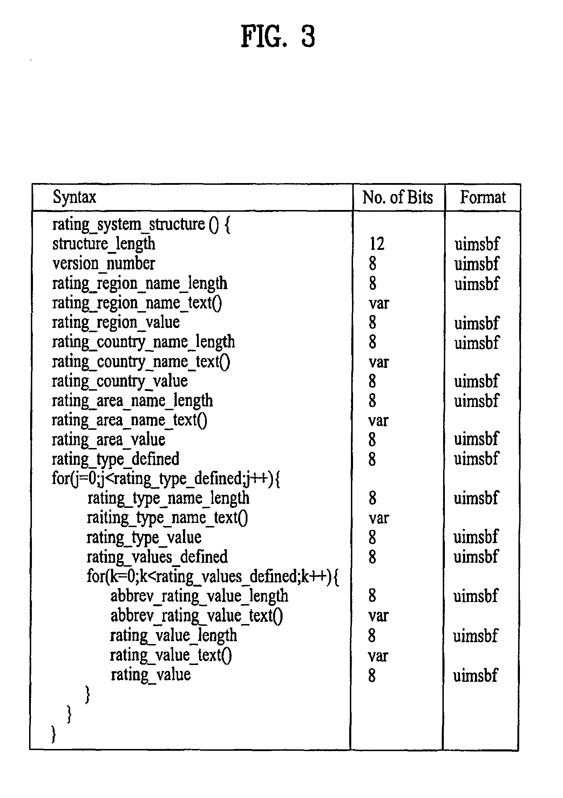

FIG. 3 is an exemplary diagram of a rating system structure in the universal rating system information.

Referring to FIG. 3, the rating system structure includes at least one of first information on a version of the corresponding rating system information, second information geographical information associated with at least one of a region, a country, and an area, third information on types of various rating system information existing in the region or the like, and fourth information on a rating value usable in common in IPTV environment.

In this disclosure, the following description is made on the assumption that the rating value is applied to a plurality of rating system structures existing in each region or the like with reference to an age for example. The assumption is based on a fact that a plurality of rating types within the rating system structure existing in each region or the like are mostly defined with reference to ages. Yet, the present disclosure is not limited to the ages only and includes a medium capable of unificatively binding different rating types together. And, the present disclosure is not restricted by a name of the rating value (rating_value) as well. So, if the rating value (rating_value) is used as a common reference in IPTV environment, compatibility between the different rating system structures is raised and enhances convenience in enabling a user to control contents viewing.

Fields constructing the rating system structure shown in FIG. 3 are explained as follows.

First of all, a field 'structure_length' indicates a size of data included in a corresponding rating system structure by a byte unit.

Field 'version_number' defines version information of a corresponding rating system structure. In this case, the version information is increased by an operation of 1 modulo 256 if at least one of fields constructing a rating system structure is modified or updated.

As information on a region to which a rating system structure is applied, a field 'rating_region_name_length' defines a length or size of a region name, a field 'rating_region_name_text()' defines a region name of a text type, and a field 'rating_region_value' defines a region identification number capable of identifying a region name.

As information on a country to which a rating system structure is applied, a field 'rating_country_name_length' field indicates a length or size of a country name, a field 'rating_country_name_text()' indicates a country name of a text type, and a field 'rating_country_value' indicates a country identification number capable of identifying a country name.

As information on an area to which a rating system structure applied, a field 'rating_area_name_length' field indicates a length or size of an area name, a field 'rating_area_name_text()' indicates an area name of a text type, and a field 'rating_area_value' indicates an area identification number capable of identifying a country name.

The region or the like used for the field within the above-described rating system structure can be defined in a following manner for example. The region can be used to mean a widest range capable of including a plurality of countries such as a continent and the like, the country can be used as a range narrower than the region to mean a single country, and the area can be used as a smallest range to mean a plurality of areas or a single area within a single country. Theses terminologies are exemplarily used for convenience and also differently usable in the present disclosure. For instance, in case of representing a rating system structure for the East of U.S.A. in North America, a region provides information on North America, a country provides information on United States, and an area provides information on East Coast, for example.

As information on rating types in accordance with various deliberation references existing in the region or the like, a field 'rating_type_defined' provides information on the number of types and has a loop structure according to each type. The loop structure is explained as follows.

First of all, a field 'rating_type_name_length' provides information on a length of size of a type name, a field 'rating_type_name_text()' field provides a type name of a text format, and a field 'rating_type_value' provides information on a type identification number.

A 'rating_values_defined' filed in the loop structure provides number information of rating information existing in a corresponding type and has a loop structure for each rating information again.

A field 'abbrev_rating_value_length' provides a length or size of abbreviation information of a rating, a field 'abbrev_rating_value_text()' provides abbreviation information of a rating of a text format, a field 'rating_value_length' provides a length or size of rating information of a rating, and a field 'rating_value_text()' provides information on a corresponding rating of a text format.

As mentioned in the foregoing description, the field 'rating_value' defines the meaning of each rating in a rating system structure existing in each region or the lie according to the present disclosure to enhance convenience in viewing controlling. For instance, in using the field 'rating_value' between transmitting and receiving sides, the field value can be defined and used in a table format shown in Table 1.

Table 1 shows an example of a table configured to explain a field value of 'rating_value' according to the present disclosure.

**[Table 1]**

| rating_value | **Description** |
|---|---|
| 00000000 | Available to all age |
| 00001111 | Unrated(out of rating) |
| 00000001 ~ 00000100 | Reserved |
| 00000101 ~ 00011100 | Actual available age |
| 10000101 ~ 10011100 | Actual available age |
| 11111111 | This rating system is not based on the available age. |

Table 1 is a table configured to explain a value carried by a field 'rating_value' according to the present disclosure. In this case, 'rating_value' is constructed with 8 bits.

In this case, most significant bit (MSB) of 'rating_value' is usable as a graduated scale. With reference to ages, the graduated scale applies controlling contents viewing to all viewers under a specific age or applies controlling contents viewing to audiences of a specific age only to allow viewing for ages above or below the specific age.

For instance, in case of attempting to apply controlling contents viewing to all audiences under 15, if MSB of 'rating_value' is set to 0 and if a value corresponding to 15 is defined with the rest of bits, it can be understood as applying controlling contents viewing to all audiences under 15. Yet, in case of apply controlling contents viewing to audiences of age 15 only, if MSB of 'rating_value' is set to 1 and if a value corresponding to 15 is defined with the rest of bits, the controlling contents viewing is applied to the audience of age 15 only, as mentioned in the foregoing description, it can be observed that the controlling contents viewing is not applied to audiences of ages except 15.

If 'rating_value' is set to 00000000, it indicates that viewing is allowed to audiences of all ages. If 'rating_value' is set to 00001111, it can define a case that controlling contents viewing is required as a default by being handled as 'out of rating' such as a material of sexuality. If 'rating_value' is set to 11111111, it can indicate that a reference of a corresponding rating type does not follow ages.

If 'rating_value' is set to 00000101~00011100 or 10000101~10011100, it can indicate that an age indicated by a corresponding value represents a viewing-allowed minimal age.

The table for 'rating_value' defined in Table 1 is exemplarily provided to explain the technical idea of the present disclosure, which does not restriction various implementations of the present disclosure.

The 'rating_value' may means a unique identifier (ID) indicating a plurality of rating types included in rating region table (RRT) of the North American rating system structure, i.e., each level defined in each dimension. So, if 'rating_value' indicating the unique identifier is used, it is able to aggressively cope with a variation within the corresponding rating system structure.

An example of a usable scenario for viewing controlling using the 'rating_value' indicating the unique identifier is explained as follows. As mentioned in the foregoing description, in the RRT used as a rating system structure for controlling contents viewing in North America, there exists a plurality of dimensions as a rating type. So, in case of downloading prescribed contents from a server in North America, an IPTV receiver needs to process dimensions off RRT of the contents. In this case, each of the dimensions has an index for discrimination or an index for discriminating a viewing rating level retained by the dimension of the corresponding index. The former is named a dimension index and the latter is named a level index.

In the related art broadcasting environment, a process for controlling contents viewing in a receiver is carried out using both of the indexes (dimension index and level index). If both of the indexes are used, it is difficult to cope with a variation of each of the dimensions. For instance, assuming that there is a specific dimension of which dimension index is 3 among a plurality of dimensions, if the specific dimension has four level indexes 0 to 3, each level is defined with reference to an age and the level indexes 0 to four means ages 7, 13, 18 and 20, respectively. As mentioned in the foregoing description, in order to decide a presence or non-presence of controlling contents viewing of contents received in accordance with a request made by a user, a related art receiver takes dimension and level indexes preset by the user as references. Yet, in case that a level index within a corresponding dimension is modified, when the level indexes 0 to 4 indicate ages 7, 13, 15, 18 and 20 for example, respectively, if the receiver applies the controlling contents viewing to the preset level index, e.g., the level index 3, the controlling contents viewing works with reference to age 15 instead of the age 18 indicated by the previous index level 3. This is not the controlling contents viewing wanted by the user. So, it is inconvenient for the user to set the controlling contents viewing again.

Thus, as mentioned in the foregoing description, after a unique identifier for each of the level indexes has been defined instead of taking a corresponding level index as a reference, if the unique identifier is sent as 'rating_value, the receiver applies the controlling contents viewing using the dimension index and the 'rating_value' in each dimension. So, the receiver is able to cope with every modification or variation of the level value within the corresponding dimension, thereby applying the controlling contents viewing appropriate for the user's intention.

As mentioned in the foregoing description, the transmitting/receiving side transmits/receives a rating system structure in each region or the like and then uses the corresponding rating system structure. In particular, an IPTV receiver accesses each region or the like having contents and then downloads the rating system structure shown in FIG. 3 or the like. Hence, the transmitting/receiving side is able to use the downloaded rating system structure for controlling contents viewing.

After having received the rating system structure of a prescribed region or the like, the IPTV receiver needs no further reception except special cases and uses the received rating system structure as rating information on contents of the corresponding region or the like.

A process for transmitting and receiving the rating system structure is explained as follows.

First of all, an IPTV receiver receives contents using an internet network connected to each home and then provides the received contents to a user. In this case, the controlling contents viewing of the contents is carried out using a rating system structure received together with the contents.

The received rating system structure is created based on various kinds of deliberation references for culture, educational level, environment and the like of each region creating the corresponding rating system structure. This is because contents having the same substance may differ from each other in evaluation in accordance with the deliberation reference in each region or the like.

In this disclosure, the following description is made using an example that electronic program guide (EPG), service discovery information or the like is used in transmitting/receiving a rating system structure. In this case, the EPG, service discovery information or the like, which includes the rating system structure, can be configured in a metadata format. For clarity and convenience of explanation, a service provider discovery record, as a sort of the service discovery information, is used for the following description.

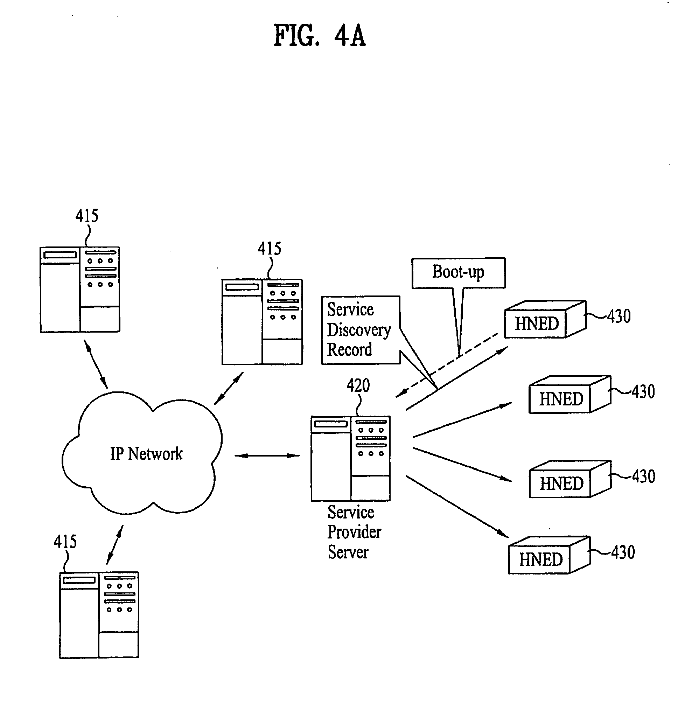

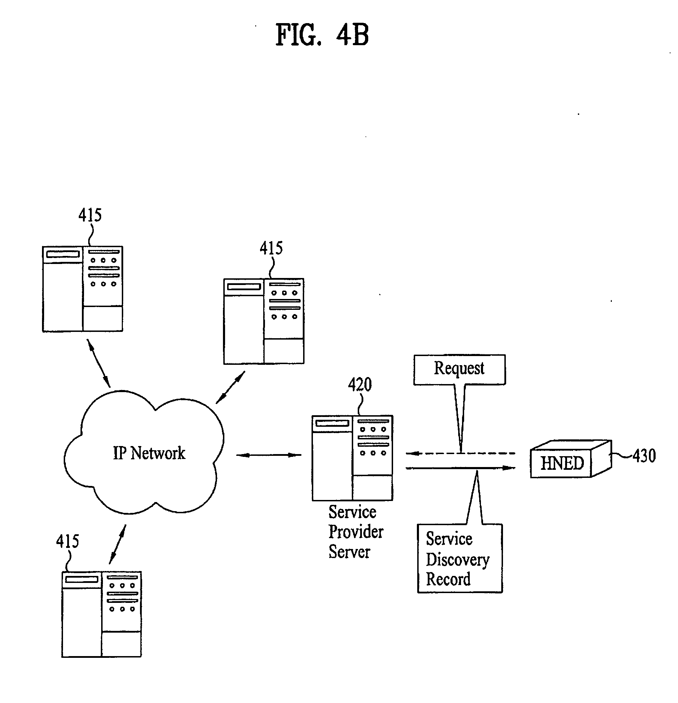

FIG. 4A and FIG. 4B are diagrams to explain a service provider discovery information transmitting system.

First of all, services provided in IPTV environment can be mainly divided into a live media broadcast and contents on demand.

The live media broadcast can be subdivided into a case [TS-Full SI] that service information (SI) on a broadcast is transmitted by being included in a transport stream and a case that the service information (SI) is not included in the transport stream except MPEG-PSI (moving picture experts group - program specific information).

If an IP broadcast receiver (home network end device: HNED) 430 is driven or makes a request, a service provider (hereinafter called 'local service provider) 420 transmits service provider discovery information including location information of other service providers (hereinafter called 'foreign service providers') 415 connected via an internet network.

In particular, the IPTV broadcast receiver (HNED) 430 confirms the location information on the foreign service providers 415 using a service provider discovery record provided by the local service provider 420.

In this case, a multicast method or push model (FIG. 4A) or a unicast method or pull model (FIG. 4B) is possibly provided between the local service provider 420 and the IPTV receiver (HNED) 430 in accordance with a transport system.

In the multicast shown in FIG. 4A, if the IPTV receiver (HNED) 430 is driven, the local service provider 420 transfers a service provider discovery record including location information on the foreign service providers 415 connected via an internet network to each of the driven IPTV receivers (HNEDs) 430.

In the unicast method shown in FIG. 4B, if the IPTV receiver (HNED) 430 makes a request for information to the local service provider 420, the local service provider 420 transfers a service provider discovery record including location information on the foreign service providers 415 connected via an internet network to the IPTV receiver (HNED) 430 having made the request.

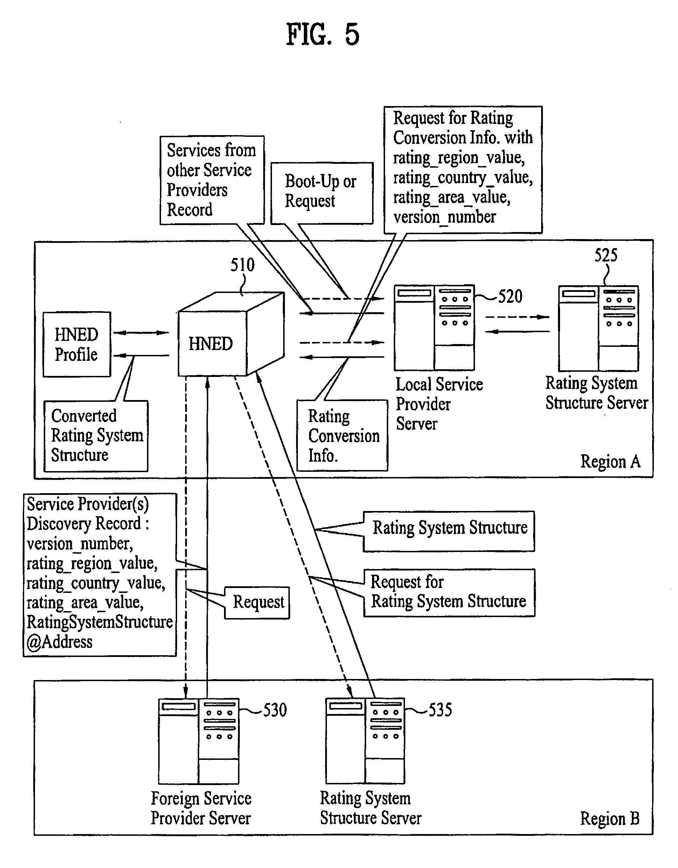

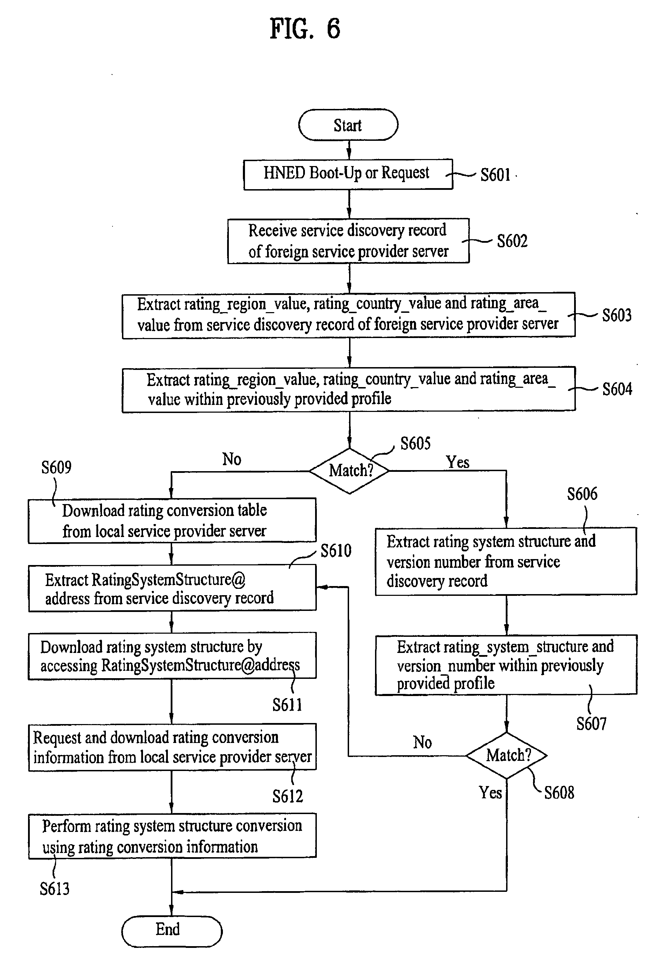

FIG. 5 is an exemplary diagram to explain a method of downloading a rating system structure in an IPTV receiver, and FIG. 6 is an exemplary flowchart for the method shown in FIG. 5.

Referring to FIG. 5 and FIG. 6, if a HNED 510 is driven (multicast method) or a user makes a request (unicast method) [S601], an internal service provider or a local service provider 520 transfers service discovery information including services from records of other service providers to the HNED 510.

The HNED 510 is able to access a foreign service provider 530 in a region, to which a receiver does not belong, using the transferred service discovery information.

In case of being accessed by the HNED 510, the foreign service provider 530 transfers a service provider discovery record including a rating system structure. The HNED 510 then receives the service provider discovery record transferred by the foreign service provider 530 [S602].

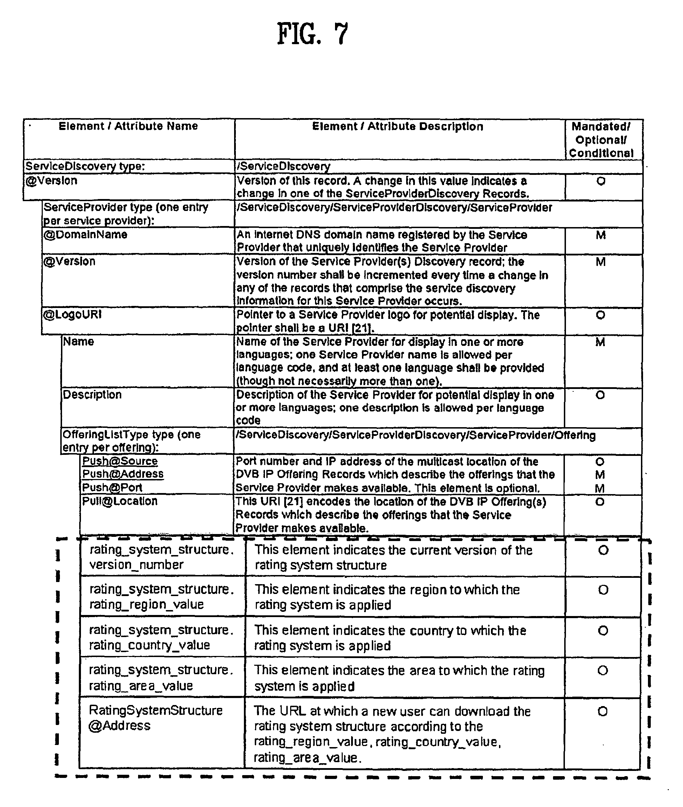

The service provider discovery record received by the HNED 510 may be defined as shown in FIG. 7 for example.

FIG. 7 is an exemplary diagram of a service provider discovery record configured.

An accompanying service provider discovery record is configured for the case that the HNED 510 executes a rating conversion for itself using the received service provider discovery record. A part boxed by a dotted line in the configuration of the service provider discovery record shown in FIG. 7 indicates a rating system structure.

Referring to FIG. 7, information on the rating system structure can include at least one selected from the group consisting of version information on a current rating system structure, identification information on a region or the like to which a corresponding rating system structure is applied, and information on an address foe enabling a corresponding rating system structure to be downloaded. And, the information on the address includes a uniform resource locator (URL). And, the information on the rating system structure shown in FIG. 7 is provided as an optional item but can be provided as a mandatory item.

The HNED 510 parses the information on the rating system structure within the service provider discovery record received from the foreign service provider 530. The HNED 510 extracts first identification information on identification of a region or the like, to which a corresponding rating system structure is applied, from the parsed information on the rating system structure [S603]. In this case, the extracted first identification information may mean a prescribed one of the information on the identification of the region or the like to which the corresponding rating system structure is applied.

Subsequently, the HNED 510 extracts second identification information corresponding to the first identification information from information on a rating system structure within a previously provided profile [S604].

The HNED 510 then compares the extracted first identification information and the extracted second identification information to each other [S605].

As a result of the comparison, if the extracted first identification information matches the extracted second identification information, the HNED 510 extracts first version information on a version from the parsed information on the rating system structure [S606], extracts second version information on a version from a profile previously provided to itself [S607], and then compares the extracted first version information and the extracted second version information to each other [S608].

As a result of the comparison, if the extracted first version information matches the extracted second version information, it is decided that the information on the rating system structure of the region to which the foreign service provider 530 belongs is previously provided. So, the corresponding information is not downloaded again. And, the information on the rating system structure within the previously provided profile is used for the controlling contents viewing according to the request made by the user.

Otherwise, if the first version information fails to match the second version as a result of the comparison or if the first version information fails to match the second version as a result of the comparison in the step S605, the HNED 510 should download information on a rating system structure of the region to which the foreign service provider 530 belongs. If the rating system structure of the corresponding region or the like does not exist or even if the rating system structure of the corresponding region or the like exists in an old version, the corresponding information should be downloaded to enable controlling contents viewing appropriate for the variation or modification within the rating system structure.

For this, the HNED 510 receives a rating conversion table necessary to perform a rating conversion for itself from the local service provider 520 [S609]. The HNED 510 extracts information on an address of the rating system structure from the parsed information of the rating system structure [S61 0]. The HNED 510 accesses the corresponding address using the extracted information on the address and then downloads the rating system structure [S611].

Subsequently, the HNED 510 requests rating conversion information from the local service provider 520 and then downloads the rating conversion information [S612]. In doing so, in case of receiving the rating conversion information request from the HNED 510, the local service provider 520 accesses a rating system structure server 525, receives information relevant to the request, and then transfers the received information to the HNED 510. Besides, the step S609 and S612 can be simultaneously executed in parallel instead of being separately executed.

In case of receiving the rating conversion information according to the request from the local service provider 520, the HNED 510 performs a conversion using the received rating conversion information and the previously received rating conversion table [S613].

Through the above-explained process, the HNED 510 converts the information on the rating system structure received from the foreign service provider 530 for itself and is then able to use the converted information for the controlling contents viewing.

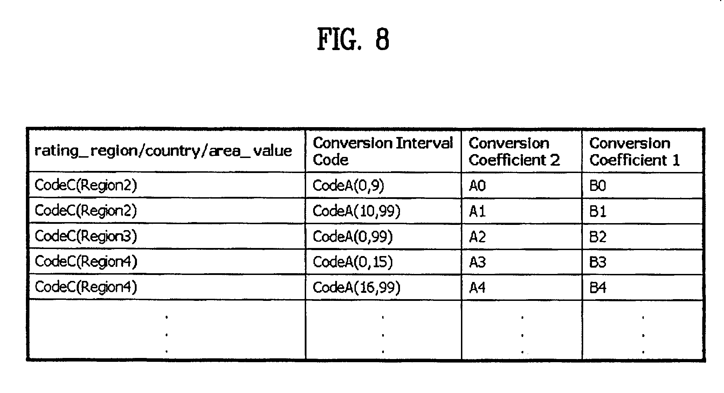

FIG. 8 is an exemplary diagram of a rating conversion table for compatibility of information on a rating system structure corresponding to a region or the like configured. In this case, the rating conversion table can be determined by a deliberation reference of each region. And, this information is directly retained by a service provider or a server having a rating conversion table should be provided. The rating conversion table is determined by an entity for deciding a rating of contents by a unit of each region or the like and the service provider is able to retain the corresponding information.

In case that the 'rating_value' information indicates a unique tag value, a rating conversion process is unnecessary as mentioned in the following description. Yet, in case that the 'rating_value' information is a value indicating an age, the 'rating_value' information should be converted in the above-mentioned manner.

In the rating conversion process, the service provider should perform the conversion using the rating conversion table or should provide information to enable the receiver to perform the conversion in direct.

Assuming that a region to which a receiver user belongs is a region 1, the rating conversion table is a conversion information table to convert a rating system structure provided by another region (region 2) different from the region 1 to be suitable for a rating system structure and deliberation reference of the region 1.

The rating conversion table should be provided by an organization for deliberating and/or determining a rating of contents in each region or the like and is retained by the service provider or the receiver. So, controlling contents viewing can be appropriately achieved by converting a rating system structure of contents received from a different region or the like.

Elements constructing the rating conversion table shown in FIG. 8 are explained as follows.

First of all, the rating conversion table includes at least one selected from the group consisting of information capable of identifying a region or the like, information on a conversion interval code, and information on a conversion coefficient.

As the information capable of identifying the region or the like, CodeC(Region N) indicates a code value representing a region N. As the information on the conversion interval code, CodeA(n1, n2) indicates a code value representing a value belonging to a range between n1 and n2. As the information on the conversion coefficient, Conversion Coefficient 1 or 2 indicates a coefficient of a conversion formula for compatibility of an inter-region rating system. Explained in the following is an example of conversion using the values defined by Conversion Coefficient 1 and Conversion Coefficient 2 for the compatibility of the inter-region rating system using a maximum value of a viewing-allowed age.

Age_C1 = Conversion Coefficient 1 * Age_C2 + Conversion Coefficient 2

In the above formula, Age_C1 indicates a converted viewing-allowed minimum age value and Age_C2 indicates a viewing-allowed minimum age value defined in an original rating type. In this case, the age value is able to use a value recorded in a field 'rating_value' of each rating type. Thus, it is able to give a viewing rating corresponding to Age_C1 as final rating information using the above conversion information.

For instance, it is firstly assumed that a content produced and supplied by U.S.A. is received by Korea. Region 1 as a region or the like to which a HNED user belongs is Korea (KR) and Region 2 as a region or the like by which the content is manufactured and supplied is U.S.A. If a rating of the produced and supplied is PG-13, a value of 'rating_value' has a value set to '00001101'.

Hence, the conversion formula results in 'Age_KR = A1 * 13 + A2'.

Age_KR indicates an age value converted suitable for Korean Deliberation Reference. Since a maximum value of a viewing-allowed age defined by PG-13 is 13, '13' is substituted for Age_C2. In this case, assuming that A1=1 and A2=2, Age_KR has a value of 15. Namely, a rating of the content converted in being applied to the defined conversion information table corresponds to PG-15.

Hence, the receiver receives the 'rating_value' corresponding to the PG-15 and then uses the received 'rating_value' for controlling contents viewing. In this case, the 'rating_value' may be transferred as a binary number meaning an age 15 or a unique tag value corresponding to the PG-15 may be transferred.

In the above-description, the rating system structure downloaded to the receiver is checked. If the downloaded rating system structure fails to exist in the previously provided profile, the corresponding rating system structure is downloaded. And, the HNED converts the downloaded rating system structure for itself.

Explained in the following description is a case that a HNED receives a converted rating system structure from a local service provider.

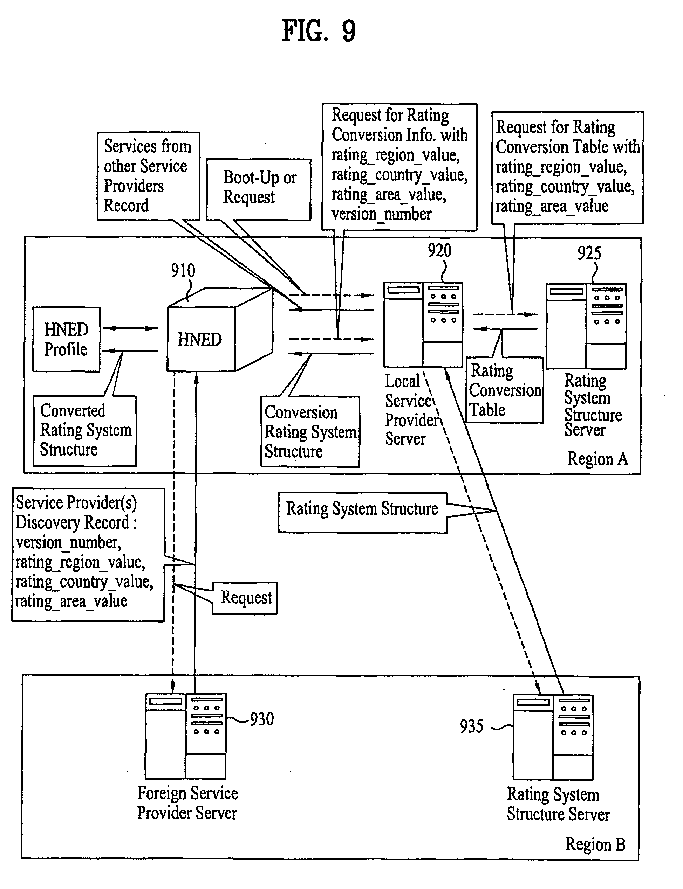

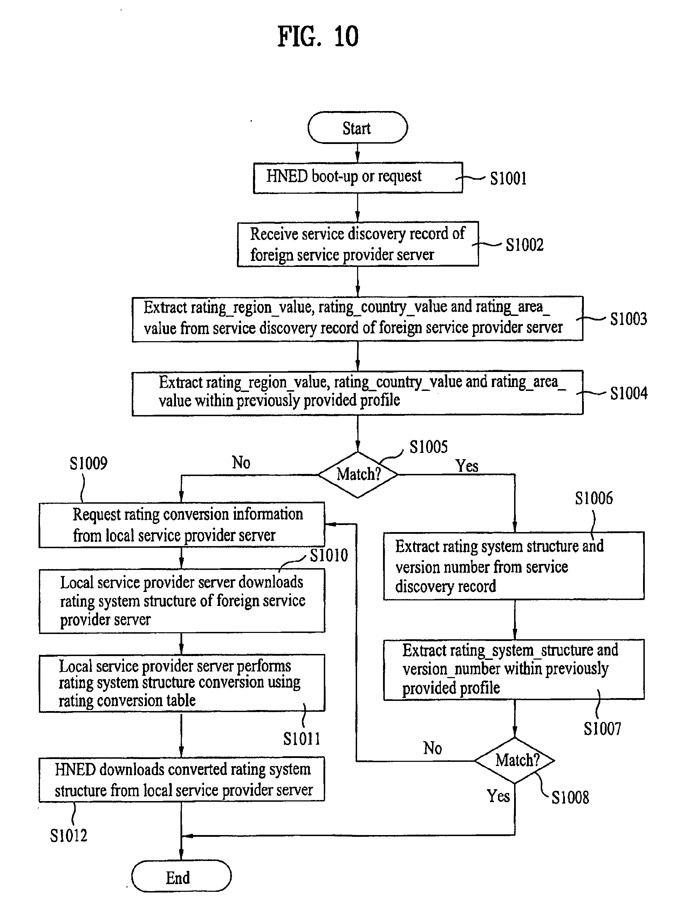

FIG. 9 is an exemplary block diagram to explain a case of receiving a rating system structure in an IPTV receiver, and FIG. 10 is an exemplary flowchart for the method shown in FIG. 9.

Referring to FIG. 9 and FIG. 10, if a HNED 910 is driven (multicast method) or a user makes a request (unicast method) [S1001], a local service provider 920 transfers service discovery information including services from records of other service providers to the HNED 910.

The HNED 910 is able to access a foreign service provider 930 in a region, to which a receiver does not belong, using the transferred service discovery information.

In case of being accessed by the HNED 910, the foreign service provider 930 transfers a service provider discovery record including a rating system structure. The HNED 910 then receives the service provider discovery record transferred by the foreign service provider 930 [S1002].

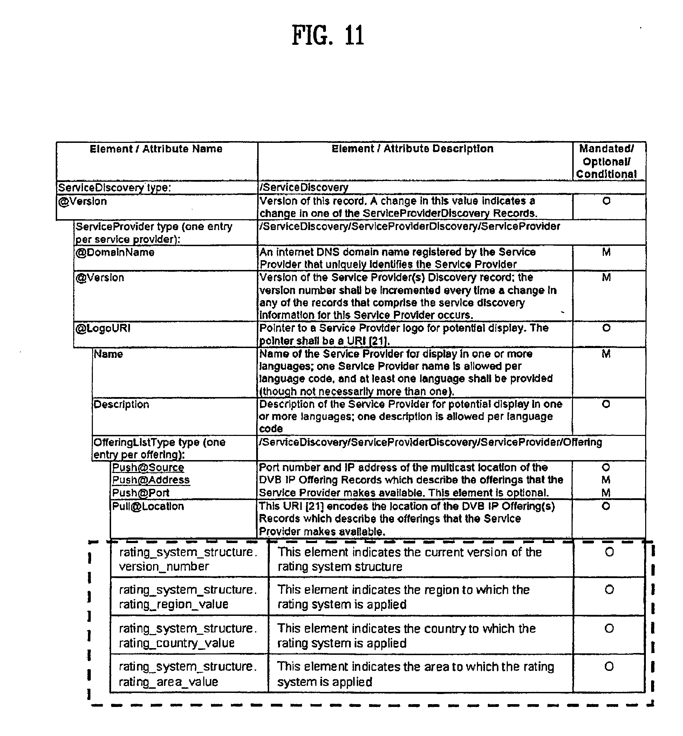

The service provider discovery record received by the HNED 910 may be defined as shown in FIG. 11 for example.

FIG. 11 is an exemplary diagram of a service provider discovery record configured.

An accompanying service provider discovery record shown in FIG. 11 is configured for the case that a local service provider downloads a rating system structure, converts the downloaded rating system structure, and then transfers the converted rating system structure to a receiver. The same or like parts in the description of FIG. 7 are cited for this description and differences between FIG. 7 and FIG. 11 are mainly explained in the following description.

First of all, FIG. 7 shows that the information on the address of the rating system structure is included in the service provider discovery record. Yet, FIG. 11 shows that information on an address of a rating system structure is not included. This is because it is unnecessary to directly download a rating system structure to the HNED 910.

The HNED 910 parses the information on the rating system structure within the service provider discovery record received from the foreign service provider 930. The HNED 910 extracts first identification information on identification of a region or the like, to which a corresponding rating system structure is applied, from the parsed information on the rating system structure [S1003].

Subsequently, the HNED 910 extracts second identification information corresponding to the first identification information from information on a rating system structure within a previously provided profile [S1004].

The HNED 910 then compares the extracted first identification information and the extracted second identification information to each other [S1005].

As a result of the comparison, if the extracted first identification information matches the extracted second identification information, the HNED 910 extracts first version information on a version from the parsed information on the rating system structure [S1006], extracts second version information on a version from a profile previously provided to itself [S1007], and then compares the extracted first version information and the extracted second version information to each other [S1008].

As a result of the comparison, if the extracted first version information matches the extracted second version information, it is decided that the information on the rating system structure of the region to which the foreign service provider 930 belongs is previously provided. So, the corresponding information is not downloaded again. And, the information on the rating system structure within the previously provided profile is used for the viewing controlling according to the request made by the user.

Otherwise, if the first version information fails to match the second version as a result of the comparison or if the first version information fails to match the second version as a result of the comparison in the step S1005, the HNED 910 makes a request for downloading a rating system structure to a local service provider 1020 [S1009].

The local service provider 920 downloads a service provider discovery record including a rating system structure from a server of a corresponding region or the like in response to the request [S1010], makes a request for a rating conversion table required for a conversion of a rating system structure within the downloaded service provider discovery record to a rating system structure server 925, and then receives the corresponding rating conversion table. The local service provider 920 converts the rating system structure using the received rating conversion table [S1011].

After completion of the conversion, the local service provider 920 transfers the converted rating system structure to the IPTV receiver 910. If so, the IPTV broadcast receiver 910 downloads the transferred converted rating system structure and then stores the downloaded rating system structure in a previously provided profile [S1012].

The above description relates to a case that a rating system structure is included in a service provider discovery record. As mentioned in the foregoing description, rating relevant information may be included in other SD information or EPG as well as the service provider discovery record. And, each information can be defined in a metadata format.

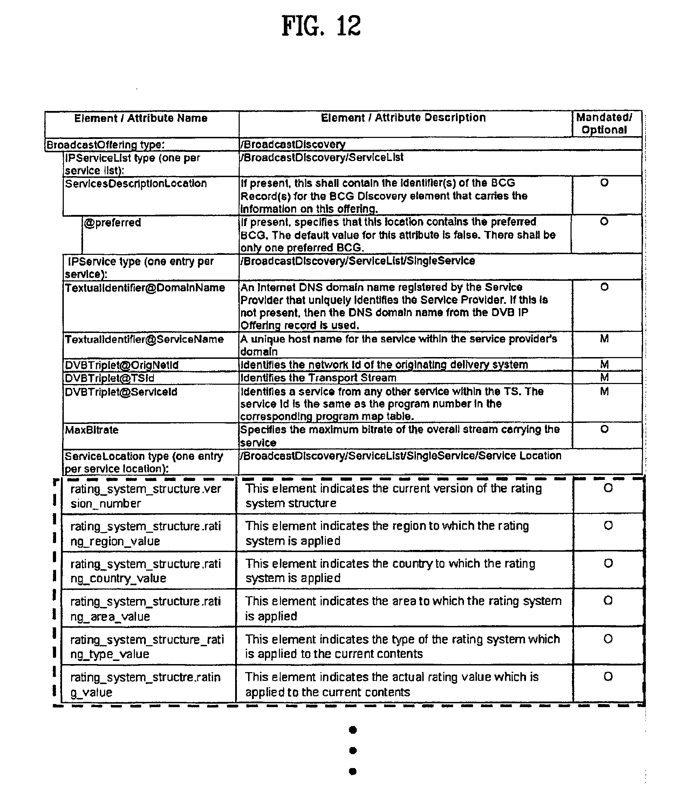

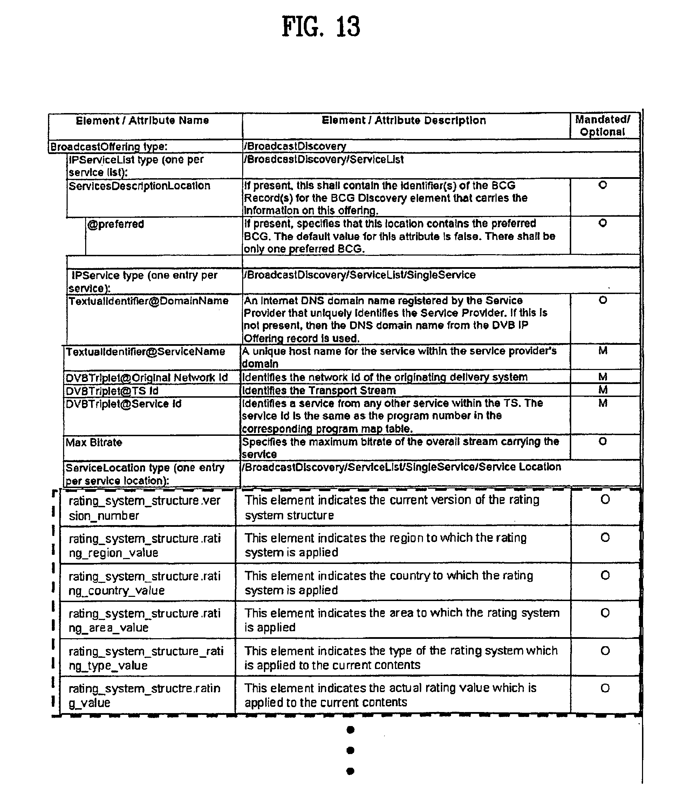

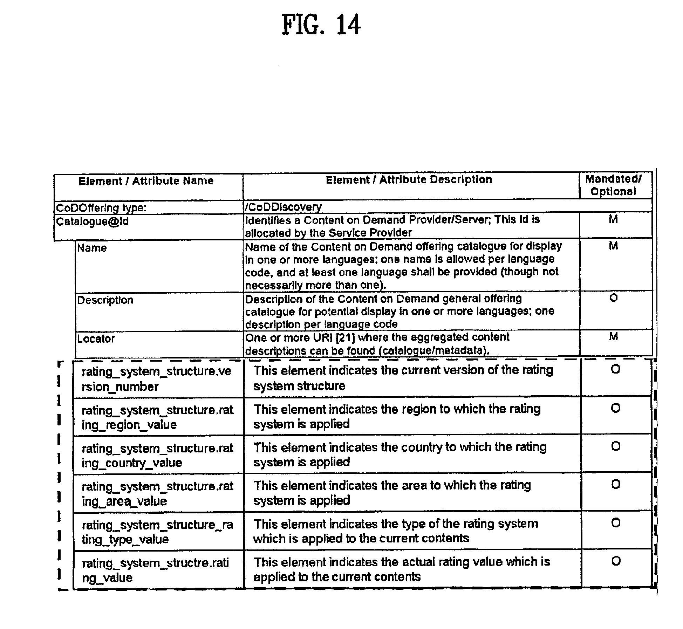

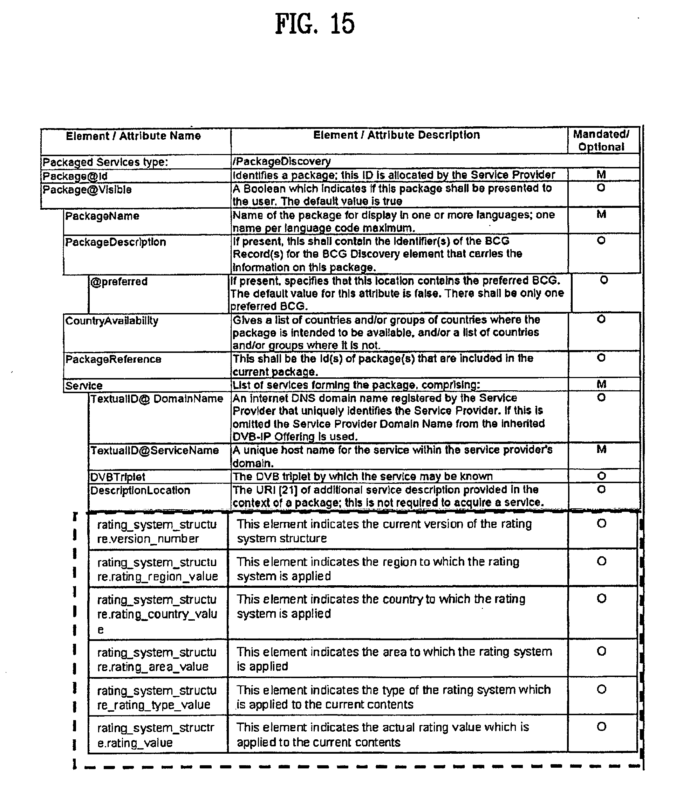

For this, FIGs. 12 to 15 are exemplary diagrams of SD informations including rating relevant information configured according to the present invention. FIG. 12 shows broadcast discovery record-TS Full SI, FIG. 13 shows broadcast discovery record-TS Optional IS, FIG. 14 shows COD discovery record, and FIG. 15 shows package discovery record. In FIGs. 12 to 15, rating relevant information (boxed by a dotted line) is included in a conventional record.

Information on the rating system structure can include at least one selected from the group consisting of version information of the rating system structure, type information within the rating system structure, and 'rating_value' information.

In a manner that the information on the rating system structure is included in the SD information shown in FIGs. 12 to 15, the IPTV broadcast receiver is able to appropriately apply the controlling contents viewing to contents received from a firstly accessed region or the like using the SD information.

In the description of the above-explained process, the IPTV receiver receives contents in a region or the like except a region or the like to which the IPTV receiver belongs and then receives the information on the rating system structure for the received contents.

Explained in the following description is a process for performing controlling contents viewing on received contents with a rating system structure received via the above-explained process.

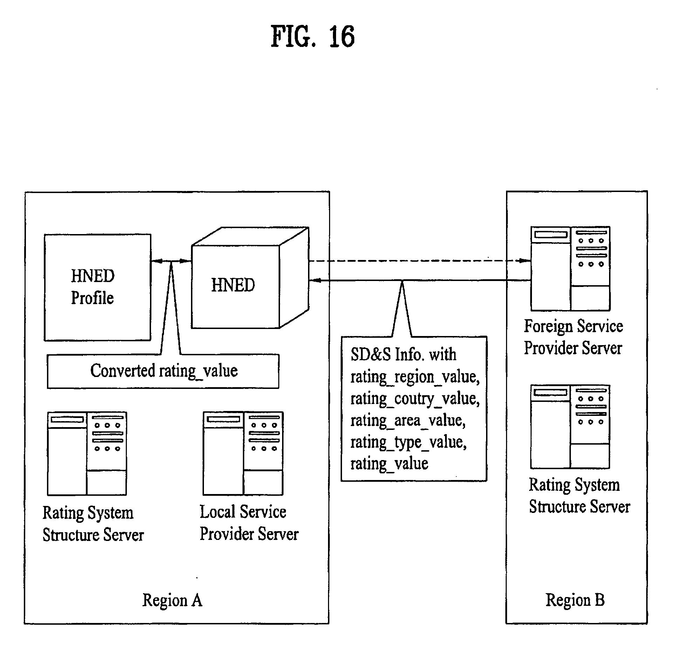

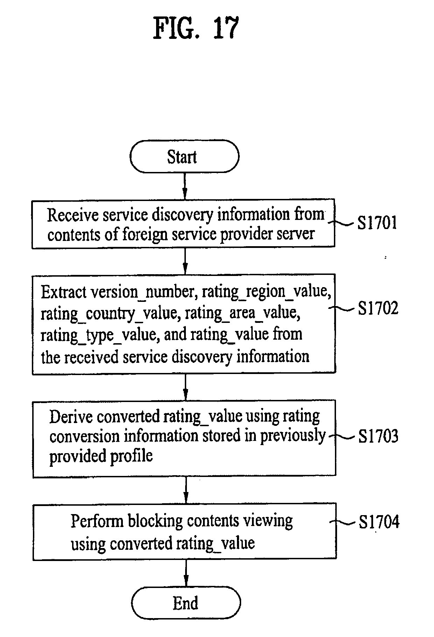

FIG. 16 is an exemplary block diagram to explain a method controlling a viewing in an IPTV receiver, and FIG. 17 is an exemplary flowchart to explain FIG. 16. In FIG. 16 and FIG. 17, in order to perform controlling contents viewing, it is assumed that a receiver directly converts information on a rating system structure and then stores the converted information in a profile provided thereto.

Referring to FIG. 16 and FIG. 17, a IPTV receiver receives SD information from a foreign service provider [S1710] and the extracts version information, identification information, type information and 'rating_value' information from information on a rating system structure included in the received SD information [S1702].

Subsequently, converted 'rating_value' information is found by converting the extracted information using rating conversion information (e.g., conversion coefficient) within a previously provided profile [S1703].

The receiver decides whether to apply controlling viewing to received contents using the found 'rating_value' information [S1704]. In this case, if information on the corresponding rating system structure is not previously stored, a rating system structure download in a corresponding region will be carried out in advance in accordance with the process shown in FIG. 7 or FIG. 11.

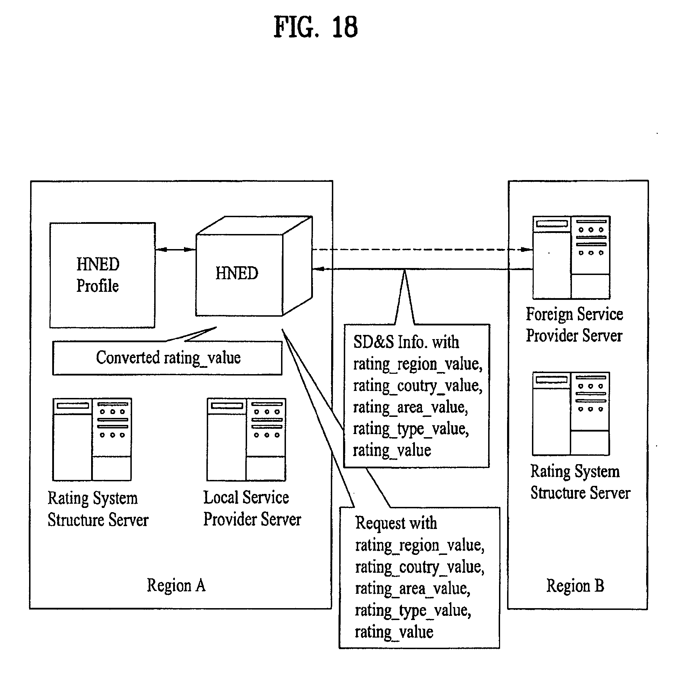

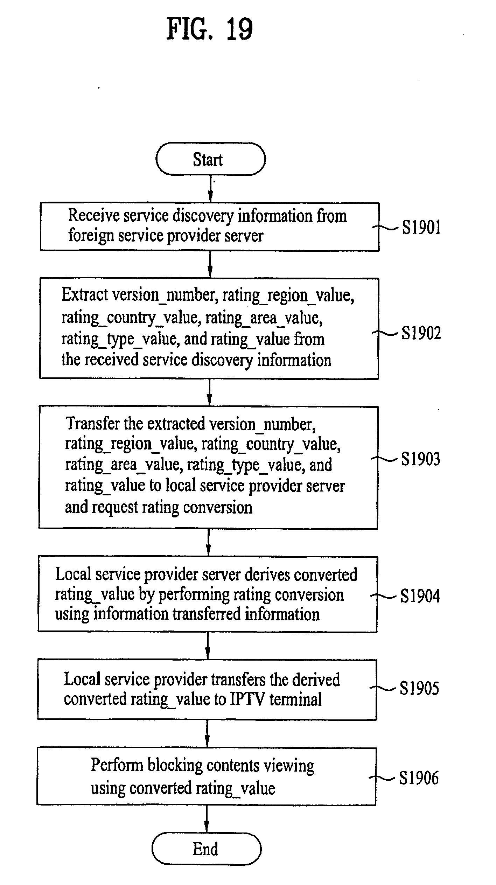

FIG. 18 is an exemplary block diagram to explain a method controlling contents viewing in an IPTV receiver, and FIG. 19 is another exemplary flowchart to explain FIG. 18. Differing from FIG. 16 and FIG. 17, FIG. 18 and FIG. 9 relate to a case that a converted rating system structure is received from a local service provider and is then used for controlling contents viewing.

Referring to FIG. 18 and FIG. 19, a local service provider downloads information on a rating system structure and then converts the downloaded rating system structure.

In particular, an IPTV receiver receives SD information from a foreign service provider [S1901] and then extracts version information, identification information, type information and 'rating_value' information of a rating system structure within the received SD information [S1902].

The receiver transfers the extracted informations to the local service provider and then makes a request for a conversion of the rating system structure [S1903].

The local service provider finds rating information, which is converted in accordance with the request made by the receiver, i.e., converted 'rating_value' information in response to the request made by the receiver [S1904].

The IPTV receiver extracts the converted 'rating_value' information from the response made by the local service provider and then decides whether to apply controlling contents viewing to a content using the extracted 'rating_value' information [S1905].

In the above description, the whole information on the rating system structure is downloaded and then converted. Alternatively, the identification information of a region or the like and the 'rating_value' information are extracted and then used for the controlling contents viewing.

For instance, the IPTV receiver compares the identification information of the region or the like. If a conversion is needed, the IPTV receiver makes a request for the conversion by providing the identification information to the local service provider. The IPTV receiver receives conversion information from the local service provider in accordance with the request and then obtains a converted 'rating_value' information by performing a conversion process in direct. So, the IPTV receiver is able to carry out the controlling contents viewing using the obtained 'rating_value' information.

Alternatively, the IPTV receiver makes a request for conversion by transferring both of the identification information and the 'rating_value' information to the local service provider and is then able to perform controlling contents viewing by receiving a converted 'rating_value' information from the local service provider in response to the request.

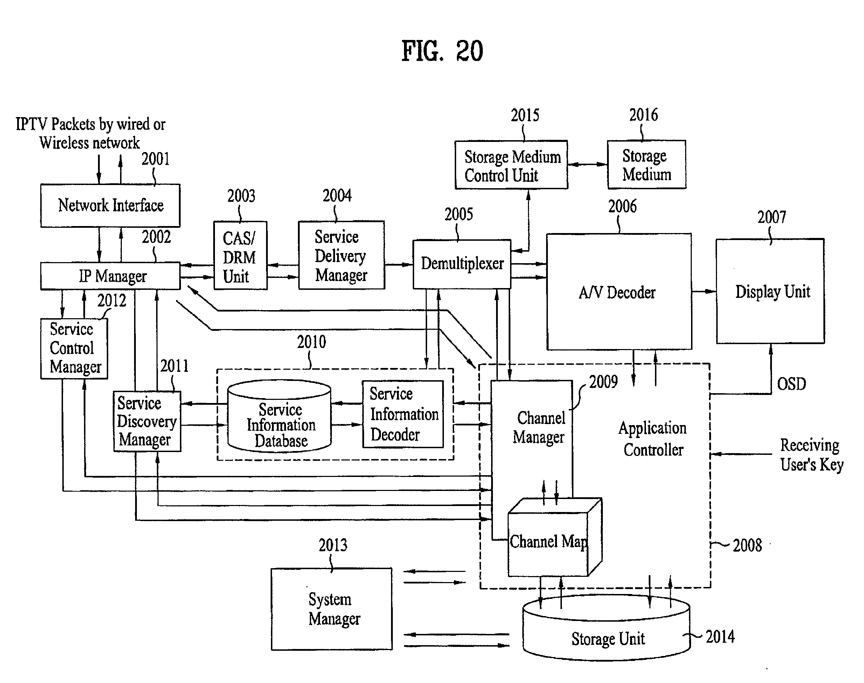

FIG. 20 is an exemplary block diagram of an IPTV receiver.

Referring to FIG. 20, an IPTV receiver may include a network interface 2001, an IP manager 2002, a conditional access system (CAS)/ digital rights management (DRM) unit 2003, a service delivery manager 2004, a demultiplexer 2005, an audio/video decoder 2006, a display unit 2007, an application controller 2008, a channel manager 2009, a service information decoder 2010, a service discovery manager 2011, a service control manager 2012, a system manager 2013, a storage unit 2014, a storage medium control unit 2015, and a storage medium 2016.

The network interface 2001 plays a role in connecting the receiver to a network for services and is able to receive/transmit packets via the connected network.

The IP manager 2002 is able to manage a delivery of a packet, which is received or transmitted via the connected network, from a source to a destination. Namely, the IP manager 2002 is ale to sort the corresponding packet to cope with a suitable protocol.

The CAS (conditional access system)/DRM (digital rights management) unit 2003 is responsible for a function of a conditional access of a service and a function associated with digital copyright management. In particular, the CAS/DRM unit 2003 receives a packet, which was received from the network connected via the network interface 2001 in association with a service, via the IP manager 2002. If a conditional access is applied to the corresponding packet or if a restriction associated with digital copyright management is applied to the corresponding packet, the CAS/DRM unit 2003 is able to release the conditional access or the restriction from the corresponding packet. Namely, the CAS/DRM unit 2003 accesses a received packet or is responsible for a packet control through redistribution.

The service delivery manager 2004 is responsible for handling real-time streaming data. In this case, RTP/RTCP (real-time transport protocol/RTP control protocol) is usable for MPEG-2 transport stream. Namely, the MPEG-2 packets are capsulated in the RTP. So, the service delivery manager 2004 parses the RTP packets and then transports a capsulated MPEG-2 packet, which is capsulated as a result of the parsing, to the demultiplexer 2005. And, the service delivery manager 2004 is able to transport a feedback for a quality of network reception using the RTCP. In this case, the MPEG-2 transport packets can be directly delivered to user datagram protocol (UDP) without the RTP.

The demultiplexer 2005 demultiplexes audio, video and program specific information (PSI) tables from the received transport stream packets. In this case, the demultiplexer 2005 demultiplexes the PSI tables under the control of a PSI decoder and also demultiplexes the audio/video transport packets under the control of the channel manager 2009. And, the demultiplexer 2005 creates a section of the demultiplexed PSI tables and then transfers the section to the PSI decoder.

The audio/video decoder 2006 receives the demultiplexed audio/video packets from the demultiplexer 2005 and then processes the received packets.

The display unit 2007 receives an audio/video signal processed by the audio/video decoder 2006 and then displays the received signal.

The application controller 2008 supports a graphic user interface (GUI) on the display unit 2007 for a user. The application controller 2008 receives a user's input via an external input means such as a remote controller or a front panel. If the user's input is associated with a channel selection, the application controller 2008 forwards the input to the channel manager 2009. And, the application controller 2008 is able to control key states of an overall system of the receiver or enables setup data to be stored in the storage unit 2014.

The channel manager 2009 creates a channel map or controls the service discovery manager 2011. The channel manager 200 makes a request for channel information to the service information decoder 2010 or resets the service information decoder 510. And, the channel manager 2009 sets a corresponding packet identifier (PID) in the demultiplexer 2005 to enable to receive the audio/video packet.

The service information decoder 2010 is a module for controlling such service information as PSI/PSIP (program and system information protocol)/DVB-SI (digital video broadcasting-service information). And, the service information decoder 20101 performs a slave operation under the control of the channel manager 2009. The service information decoder 2010 sets a corresponding PID in the demultiplexer 2005 to enable to demultiplex the service information such as the PSI/PSIP/DVB-SI. The service information decoder 2010 receives and processes the service information relevant section created by the demultiplexer 2005 in accordance with the setup. And, the service information decoder 2010 receives service information from the service delivery manager 2004 and then creates a service information database for a broadcast service.

The service discovery manager 2011 discovers IPTV services via an interactive IP network and then enables the discovered IPTV services. And, the service discovery manager 2011 provides all information for a selected service.

The service control manager 2012 is responsible for selections and controls of services. For instance, the service control manager 2012 selects a live broadcast service using internet group management protocol (IGMP) or real-time streaming protocol (RTSP) or selects video on demand (VoD) contents using the RTSP. In this case, the RTSP is used in controlling the delivery of TV/audio directly delivered or broadcasted. And, the RTSP is used for a continuous transmission control procedure (TCP) connection or in allowing a trick mode control for real-time broadcasting media string.

The system manager 2013 controls a boot flow in accordance with on/of of a power of the receiver system and writes or stores read only memory (ROM) image including a downloaded software image in the storage unit 2014.

The storage unit 2014 stores data setup for the system and the like therein. A non-volatile memory (non-volatile RAM: NVRAM), a flash memory or the like is used as the storage unit 2014.

The storage medium 2016 temporarily stores a signal transferred from the demultiplexer 2005 or the audio/video decoder 2006 and then transfers back the stored signal to the demultiplexer 2005 or the audio/video decoder 2006. In this case, the storage medium 2016 writes data from the received signal, stores the signal, and provides the signal to the demultiplexer 2005, under the control of the storage medium control unit 2015.

Accordingly, the present disclosure provides the following effects and/or advantages in association with a contents standard rating system structure in IPTV environment and method of transmitting/receiving the same.

First of all, the present disclosure defines a rating system structure that can be internationally usable.

Secondly, even if various rating system structures such as IPTV environments exist, they can be converted to be usable.

Thirdly, the present disclosure enables a plurality of rating system types to be set, thereby securing extensibility of a rating system structure.

It will be apparent to those skilled in the art that various modifications and variations can be made in the present invention without departing from the scope of the inventions.

## Claims

1. A method for controlling a content viewing in an internet protocol television (IPTV) receiver, the method comprising:
receiving a content, service discovery information and a rating system structure from a first server;
extracting the service discovery information including rating system information related to the received rating system structure of the first server;
receiving rating conversion information from a second server;
converting the rating system structure of the first server based upon the received rating conversion information; and
controlling viewing of the received content based upon the converted rating system structure.

2. The method of claim 1, further comprising:
receiving rating system information from the second server;
determining whether or not the rating system information received from the first server is identical to the rating system information received from the second server; and
requesting the rating conversion information to the second server if the rating system information received from the first server differs from the rating system information received from the second server.

3. The method of claim 2, wherein the rating system information received from the first server and the second server includes at least one of rating information defining each level of a plurality of rating types in the rating system structure, version information of the rating system structure, geographical information associated with at least one of a region, a country and an area to which the rating system structure is applied and rating type information in the rating system structure.

4. The method of claim 1, wherein the service discovery information includes at least one of a service provider discovery record, broadcast discovery record, content on demand discovery record, package discovery record, and broadband content guide discovery record.

5. A method for controlling a content viewing in an internet protocol television (IPTV) receiver, the method comprising:
receiving a content and service discovery information from a first server, the service discovery information includes rating system information related to a rating system structure of the first server;
transmitting the rating system information of the first server to a second server;
receiving a converted rating system structure from the second server; and
controlling viewing of the received content based upon the converted rating system structure.

6. The method of claim 5, further comprising:
receiving a rating system information related to a rating system structure of the second server; and
determining whether or not the rating system information of the first server is identical to the rating system information of the second server.

7. The method of claim 6, wherein the rating system information received from the first server and the second server includes at least one of rating information defining each level of a plurality of rating types in the rating system structure, version information of the rating system structure, geographical information associated with at least one of a region, a country and an area to which the rating system structure is applied and rating type information in the rating system structure.

8. The method of claim 7, wherein the service discovery information includes at least one of a service provider discovery record, broadcast discovery record, content on demand discovery record, package discovery record, and broadband content guide discovery record.

9. An internet protocol television (IPTV) receiver, the receiver comprising:
a receiving unit for receiving IPTV packets including a content, service discovery information and a rating system structure from a first server and receiving rating system information and rating conversion information from a second server, the service discovery information including rating system information related to the rating system structure of the first server;
a decoder for decoding the received IPTV packets from the first server and the received rating system information and rating conversion information from the second server; and
a controller for controlling to request the rating conversion information to the second server if the rating system information received from the first server differs from the rating system information received from the second server, convert the rating system structure of the first server within the decoded IPTV packets and view the received content based upon the converted rating system structure and a user's selection.

10. The IPTV receiver of claim 9, further comprising:
a storage for storing the converted rating system structure; and
a display unit for displaying the content in the decoded IPTV packets.

11. The IPTV receiver of claim 10, wherein the controller controls to determine whether or not the rating system information received from the first server is identical to the rating system information received from the second server.

12. An internet protocol television (I PTV) receiver, the receiver comprising:
a receiving unit for receiving IPTV packets including a content, service discovery information and a rating system structure from a first server and receiving rating system information and a converted rating system structure from a second server, the service discovery information including rating system information related to the rating system structure of the first server;
a decoder for decoding the received IPTV packets from the first server; and
a controller for controlling to transmit the rating system information of the first server to the second server if the rating system information received from the first server differs from the rating system information received from the second server and view the received content based upon the converted rating system structure and a user's selection.

13. The IPTV receiver of claim 12, further comprising:
a storage for storing the converted rating system structure; and
a display unit for displaying the content in the decoded IPTV packets.

14. The IPTV receiver of claim 13, wherein the controller controls to determine whether or not the rating system information received from the first server is identical to the rating system information received from the second server.

15. The IPTV receiver of claim 13, wherein the second server receives the rating system structure of the first server based upon the rating system information of the first server transmitted from the IPTV receiver.

## Patentansprüche

1. Verfahren zum Steuern einer Inhaltsbetrachtung in einem Internet-Protocol-Television- (IPTV-) Empfänger, wobei das Verfahren aufweist:
Empfangen eines Inhalts, von Service-Discovery-Informationen und einer Rating-Systemstruktur von einem ersten Server;
Extrahieren der Service-Discovery-Informationen mit Rating-Systeminformationen, die sich auf die empfangene Rating-Systemstruktur des ersten Servers beziehen;
Empfangen von Rating-Umwandlungsinformationen von einem zweiten Server;
Umwandeln der Rating-Systemstruktur des ersten Servers auf der Grundlage der empfangenen Rating-Umwandlungsinformationen; und
Steuern einer Betrachtung des empfangenen Inhalts auf der Grundlage der umgewandelten Rating-Systemstruktur.

2. Verfahren nach Anspruch 1, ferner mit:
Empfangen von Rating-Systeminformationen vom zweiten Server;
Bestimmen, ob die vom ersten Server empfangenen Rating-Systeminformationen mit dem vom zweiten Server empfangenen Rating-Systeminformationen identisch sind; und
Anfordern der Rating-Umwandlungsinformationen zum zweiten Server, wenn sich die vom ersten Server empfangenen Rating-Systeminformationen von den vom zweiten Server empfangenen Rating-Systeminformationen unterscheiden.

3. Verfahren nach Anspruch 2, wobei die vom ersten Server und zweiten Server empfangenen Rating-Systeminformationen Rating-Informationen zur Festlegung jeder Ebene mehrerer Rating-Typen in der Rating-Systemstruktur, Versionsinformationen der Rating-Systemstruktur, Geografieinformationen in Zuordnung zu einer Region, einem Land und/oder einem Gebiet, auf die (das) die Rating-Systemstruktur angewendet wird, und/oder Rating-Typinformationen in der Rating-Systemstruktur aufweisen.

4. Verfahren nach Anspruch 1, wobei die Service-Discovery-Informationen einen Service Provider Discovery Record, Broadcast Discovery Record, Content on Demand Discovery Record, Package Discovery Record und/oder Broadband Content Guide Discovery Record aufweisen.

5. Verfahren zum Steuern einer Inhaltsbetrachtung in einem Internet-Protocol-Television- (IPTV-) Empfänger, wobei das Verfahren aufweist:
Empfangen eines Inhalts und von Service-Discovery-Informationen von einem ersten Server, wobei die Service-Discovery-Informationen Rating-Systeminformationen aufweisen, die sich auf eine Rating-Systemstruktur des ersten Servers beziehen;
Senden der Rating-Systeminformationen des ersten Servers zu einem zweiten Server;
Empfangen einer umgewandelten Rating-Systemstruktur vom zweiten Server; und
Steuern einer Betrachtung des empfangenen Inhalts auf der Grundlage der umgewandelten Rating-Systemstruktur.

6. Verfahren nach Anspruch 5, ferner mit:
Empfangen von Rating-Systeminformationen, die sich auf eine Rating-Systemstruktur des zweiten Servers beziehen; und
Bestimmen, ob die Rating-Systeminformationen des ersten Servers mit den Rating-Systeminformationen des zweiten Servers identisch sind.

7. Verfahren nach Anspruch 6, wobei die vom ersten Server und zweiten Server empfangenen Rating-Systeminformationen Rating-Informationen zur Festlegung jeder Ebene mehrerer Rating-Typen in der Rating-Systemstruktur, Versionsinformationen der Rating-Systemstruktur, Geografieinformationen in Zuordnung zu einer Region, einem Land und/oder einem Gebiet, auf die (das) die Rating-Systemstruktur angewendet wird, und/oder Rating-Typinformationen in der Rating-Systemstruktur aufweisen.

8. Verfahren nach Anspruch 7, wobei die Service-Discovery-Informationen einen Service Provider Discovery Record, Broadcast Discovery Record, Content on Demand Discovery Record, Package Discovery Record und/oder Broadband Content Guide Discovery Record aufweisen.

9. Internet-Protocol-Television- (IPTV-) Empfänger, wobei der Empfänger aufweist:
eine Empfangseinheit zum Empfangen von IPTV-Paketen mit einem Inhalt, Service-Discovery-Informationen und einer Rating-Systemstruktur von einem ersten Server und Empfangen von Rating-Systeminformationen und Rating-Umwandlungsinformationen von einem zweiten Server, wobei die Service-Discovery-Informationen Rating-Systeminformationen aufweisen, die sich auf die Rating-Systemstruktur des ersten Servers beziehen;
einen Decoder zum Decodieren der empfangenen IPTV-Pakete vom ersten Server und der empfangenen Rating-Systeminformationen und Rating-Umwandlungsinformationen vom zweiten Server; und
einer Steuerung zum Steuern, um die Rating-Umwandlungsinformationen zum zweiten Server anzufordern, wenn sich die vom ersten Server empfangenen Rating-Systeminformationen von den vom zweiten Server empfangenen Rating-Systeminformationen unterscheiden, die Rating-Systemstruktur des ersten Servers in den decodierten IPTV-Paketen umzuwandeln und den empfangenen Inhalt auf der Grundlage der umgewandelten Rating-Systemstruktur und einer Benutzerauswahl zu betrachten.

10. IPTV-Empfänger nach Anspruch 9, ferner mit:
einem Speicher zum Speichern der umgewandelten Rating-Systemstruktur; und
einer Anzeigeeinheit zum Anzeigen des Inhalts in den decodierten IPTV-Paketen.

11. IPTV-Empfänger nach Anspruch 10, wobei die Steuerung so steuert, dass sie bestimmt, ob die vom ersten Server empfangenen Rating-Systeminformationen mit den vom zweiten Server empfangenen Rating-Systeminformationen identisch sind.

12. Internet-Protocol-Television- (IPTV-) Empfänger, wobei der Empfänger aufweist:
eine Empfangseinheit zum Empfangen von IPTV-Paketen mit einem Inhalt, Service-Discovery-Informationen und einer Rating-Systemstruktur von einem ersten Server und Empfangen von Rating-Systeminformationen und einer umgewandelten Rating-Systemstruktur von einem zweiten Server, wobei die Service-Discovery-Informationen Rating-Systeminformationen aufweisen, die sich auf die Rating-Systemstruktur des ersten Servers beziehen;
einen Decoder zum Decodieren der empfangenen IPTV-Pakete vom ersten Server; und
einer Steuerung zum Steuern, um die Rating-Systeminformationen des ersten Servers zum zweiten Server zu senden, wenn sich die vom ersten Server empfangenen Rating-Systeminformationen von den vom zweiten Server empfangenen Rating-Systeminformationen unterscheiden, und den empfangenen Inhalt auf der Grundlage der umgewandelten Rating-Systemstruktur und einer Benutzerauswahl zu betrachten.

13. IPTV-Empfänger nach Anspruch 12, ferner mit:
einem Speicher zum Speichern der umgewandelten Rating-Systemstruktur; und
einer Anzeigeeinheit zum Anzeigen des Inhalts in den decodierten IPTV-Paketen.

14. IPTV-Empfänger nach Anspruch 13, wobei die Steuerung so steuert, dass sie bestimmt, ob die vom ersten Server empfangenen Rating-Systeminformationen mit den vom zweiten Server empfangenen Rating-Systeminformationen identisch sind.

15. IPTV-Empfänger nach Anspruch 13, wobei der zweite Server die Rating-Systemstruktur des ersten Servers auf der Grundlage der vom IPTV-Empfänger gesendeten Rating-Systeminformationen des ersten Servers empfängt.

## Revendications

1. Procédé de contrôle de contenus affichés dans un récepteur de télévision de protocole Internet (IPTV), le procédé comprenant :
la réception d'un contenu, d'informations de découverte de service et d'une structure de système de notation à partir d'un premier serveur ;
l'extraction des informations de découverte de service comprenant des informations de système de notation liées à la structure de système de notation reçue du premier serveur ;
la réception d'informations de conversion de notation à partir d'un deuxième serveur ;
la réception de la structure de système de notation du premier serveur sur la base des informations de conversion de notation reçues ; et
la commande de l'affichage du contenu reçu sur la base de la structure de système de notation convertie.

2. Procédé selon la revendication 1, comprenant en outre :
la réception d'informations de système de notation du deuxième serveur ;
la détermination si les informations de système de notation reçues du premier serveur sont identiques aux informations de système de notation reçues du deuxième serveur ; et
la demande des informations de conversion de notation au deuxième serveur si les informations de système de notation reçues du premier serveur diffèrent des informations de système de notation reçues du deuxième serveur.

3. Procédé selon la revendication 2, dans lequel les informations de système de notation reçues du premier serveur et du deuxième serveur comprennent au moins l'une des informations de notation définissant chaque niveau d'une pluralité de types de notation dans la structure de système de notation, des informations de version de la structure de système de notation, et des informations géographiques associées à au moins l'un d'une région, d'un pays et d'une zone à laquelle la structure de système de notation est appliquée, et des informations de type de notation dans la structure de système de notation.

4. Procédé selon la revendication 1, dans lequel les informations de découverte de service comprennent au moins l'un d'un enregistrement de découverte de fournisseur de services, d'un enregistrement de découverte de diffusion, d'un enregistrement de découverte de contenu à la demande, d'un enregistrement de découverte de pack, et d'un enregistrement de découverte de guide de contenus haut débit.

5. Procédé de contrôle de contenus affichés dans un récepteur de télévision de protocole Internet (IPTV), le procédé comprenant :
la réception d'un contenu et d'informations de découverte de service à partir d'un premier serveur, les informations de découverte de service comprenant des informations de système de notation liées à une structure de système de notation du premier serveur ;
la transmission des informations du système de notation du premier serveur à un deuxième serveur ;
la réception d'une structure de système de notation convertie du deuxième serveur ; et
le contrôle de l'affichage du contenu reçu sur la base de la structure de système de notation convertie.

6. Procédé selon la revendication 5, comprenant en outre :
la réception d'une information de système de notation liée à une structure de système de notation du deuxième serveur ; et
la détermination si les informations de système de notation du premier serveur sont identiques aux informations de système de notation du deuxième serveur.

7. Procédé selon la revendication 6, dans lequel les informations de système de notation reçues du premier serveur et du deuxième serveur comprennent au moins l'une des informations de notation définissant chaque niveau d'une pluralité de types de notation dans la structure de système de notation, des informations de version de la structure de système de notation, et des informations géographiques associées à au moins l'un d'une région, d'un pays et d'une zone à laquelle la structure de système de notation est appliquée, et des informations de type de notation dans la structure de système de notation.

8. Procédé selon la revendication 7, dans lequel les informations de découverte de service comprennent au moins l'un d'un enregistrement de découverte de fournisseur de services, d'un enregistrement de découverte de diffusion, d'un enregistrement de découverte de contenu à la demande, d'un enregistrement de découverte de pack, et d'un enregistrement de découverte de guide de contenus haut débit.

9. Récepteur de télévision de protocole Internet (IPTV), le récepteur comprenant :
une unité de réception pour recevoir des paquets IPTV comprenant un contenu, des informations de découverte de service et une structure de système de notation à partir d'un premier serveur et pour recevoir des informations de système de notation et des informations de conversion de notation à partir d'un deuxième serveur, les informations de découverte de service comprenant des informations de système de notation liées à la structure de système de notation du premier serveur ;
un décodeur pour décoder les paquets IPTV reçus du premier serveur et les informations de système de notation et les informations de conversion de notation reçues du deuxième serveur ; et
un contrôleur de commande pour demander des informations de conversion de notation au deuxième serveur si les informations de système de notation reçues du premier serveur diffèrent des informations de système de notation reçues du deuxième serveur, pour convertir la structure de système de notation du premier serveur à l'intérieur des paquets IPTV décodés et pour afficher le contenu reçu sur la base de la structure de système de notation convertie et de la sélection d'un utilisateur.

10. Récepteur IPTV selon la revendication 9, comprenant en outre :
un stockage pour stocker la structure de système de notation convertie ; et
une unité d'affichage pour afficher le contenu dans les paquets IPTV décodés.

11. Récepteur IPTV selon la revendication 10, dans lequel le contrôleur commande de déterminer si les informations de système de notation reçues du premier serveur sont identiques aux informations de système de notation reçues du deuxième serveur.

12. Récepteur de télévision de protocole Internet (IPTV), le récepteur comprenant :
une unité de réception pour recevoir des paquets IPTV comprenant un contenu, des informations de découverte de service et une structure de système de notation à partir d'un premier serveur et pour recevoir des informations de système de notation et une structure de système de notation convertie à partir d'un deuxième serveur, les informations de découverte de service comprenant des informations de système de notation liées à la structure de système de notation du premier serveur ;
un décodeur pour décoder les paquets IPTV reçus du premier serveur ; et
un contrôleur de commande pour transmettre les informations de système de notation du premier serveur au deuxième serveur si les informations de système de notation reçues du premier serveur diffèrent des informations de système de notation reçues du deuxième serveur et pour afficher le contenu reçu sur la base de la structure de système de notation convertie et de la sélection d'un utilisateur.

13. Récepteur IPTV selon la revendication 12, comprenant en outre :
un stockage pour stocker la structure de système de notation convertie ; et
une unité d'affichage pour afficher le contenu dans les paquets IPTV décodés.

14. Récepteur IPTV selon la revendication 13, dans lequel le contrôleur commande de déterminer si les informations de système de notation reçues du premier serveur sont identiques aux informations de système de notation reçues du deuxième serveur.

15. Récepteur IPTV selon la revendication 13, dans lequel le deuxième serveur reçoit la structure de système de notation du premier serveur sur la base des informations de système de notation du premier serveur transmises du récepteur IPTV.
